# EUROPÄISCHE PATENTSCHRIFT

(11) **EP 2 975 010 B1**
(45) Veröffentlichungstag und Bekanntmachung des Hinweises auf die Patenterteilung: **17.08.2016**
(21) Anmeldenummer: 14176881.2
(22) Anmeldetag: 14.07.2014
(51) Int. Cl.: C04B 35/48, C04B 35/482, C04B 35/52

(54) **Zirconiumdioxid, Verwendung von Zirconiumdioxid und Verfahren zur Herstellung eines feuerfesten Erzeugnisses**
Zirconia, use of zirconia and method for manufacturing a refractory product
Oxyde de zirconium, utilisation d'oxyde de zirconium et procédé de fabrication d'un produit réfractaire

(43) Veröffentlichungstag der Anmeldung: 20.01.2016
(73) Patentinhaber: Refractory Intellectual Property GmbH & Co. KG, 1100 Wien (AT)
(72) Erfinder: Bauer, Christoph, 8010 Graz (AT); Freiberger, Norbert, 8054 Graz (AT)
(74) Vertreter: Becker, Thomas

(56) Entgegenhaltungen:
- EP-A1- 0 908 425
- WO-A1-2010/127810
- DE-A1-102012 101 741
- JP-A- 2005 289 721
- US-A1- 2009 233 081

## Beschreibung

Die Erfindung betrifft ein Zirconiumdioxid, ein feuerfestes Erzeugnis, eine Verwendung von Zirconiumdioxid und ein Verfahren zur Herstellung eines feuerfesten Erzeugnisses.

Der Begriff "feuerfestes Erzeugnis" im Sinne der Erfindung bezeichnet insbesondere feuerfeste Erzeugnisse mit einer Einsatztemperatur von über 600° C und bevorzugt feuerfeste Werkstoffe gemäß DIN 51060, also Werkstoffe mit einem Kegelfallpunkt > SK 17. Die Ermittlung des Kegelfallpunktes kann insbesondere gemäß DIN EN 993-12 erfolgen.

Feuerfeste Erzeugnisse basieren regelmäßig auf wenigstens einem der Oxide Al₂O₃, MgO, Cr₂O₃, SiO₂, CaO oder ZrO₂.

Aufgrund der hohen Korrosionsbeständigkeit von ZrO₂ (Zirconiumdioxid), wird ZrO₂ insbesondere in solchen feuerfesten Erzeugnissen verwendet, die besonders korrosionsbeständig beziehungsweise verschleißfest ausgebildet sein müssen. Insoweit ist ein bevorzugtes Einsatzgebiet von ZrO₂ umfassenden feuerfesten Erzeugnissen beispielsweise der Stahlstrangguss, bei dem ZrO₂ umfassende feuerfeste Erzeugnisse beispielsweise als Schieberplatten, Monoblockstopfen, Tauchrohre oder Eintauchausgüsse eingesetzt werden. In der Regel ist dabei nicht das gesamte feuerfeste Erzeugnis auf Basis ZrO₂ ausgebildet, sondern allein die Bereiche, die besonders korrosions- beziehungsweise verschleißfest ausgebildet sein müssen. Insbesondere kann es sich bei diesen Bereichen um solche Bereiche der feuerfesten Erzeugnisse handeln, die beim Einsatz im Bereich der Schlacke angeordnet sind oder an denen die Stahlschmelze eine verhältnismäßig hohe Strömungsgeschwindigkeit aufweist.

Grundsätzlich hat sich ZrO₂ als korrosionsbeständiger Werkstoff in solch feuerfesten Erzeugnissen bewährt. Bei der Verwendung von ZrO₂ in einem feuerfesten Werkstoff ist jedoch stets der bekannte Umstand zu berücksichtigen, dass ZrO₂ in drei Modifikationen auftritt. So liegt reines ZrO₂ bei Raumtemperatur und bis zu einer Temperatur von etwa 1.173° C in einer monoklinen Tieftemperaturphase vor, die sich oberhalb dieser Temperatur in die tetragonale beziehungsweise kubische Hochtemperaturphase umwandelt. Oberhalb einer Temperatur von etwa 2.370° C liegt ZrO₂ allein in kubischer Modifikation vor. Diese Phasenumwandlungen sind reversibel, wobei die Rückumwandlung in die monokline Tieftemperaturmodifikation zu tieferen Temperaturen hin verschoben ist und erst etwa ab 920° C eintritt.

Da die monokline Tieftemperaturphase des ZrO₂ ein etwa 5 Vol.-% größeres Volumen aufweist als die tetragonale und kubische Hochtemperaturphase, kommt es beim Über- beziehungsweise Unterschreiten der Umwandlungstemperatur von der monoklinen Tieftemperaturphase in die tetragonale beziehungsweise kubische Hochtemperaturphase jeweils zu einer entsprechenden Kontraktion beziehungsweise Ausdehnung des ZrO₂. Aufgrund dieser Volumensänderung würde es in einem reines ZrO₂ aufweisenden feuerfesten Erzeugnisses zu einer Rissbildung im Erzeugnis kommen.

Um diesen Volumensprung des ZrO₂ bei Unterschreiten der Umwandlungstemperatur zu vermeiden, ist es bekannt, die Hochtemperaturmodifikation durch Zusätze von bestimmten Oxiden zu stabilisieren, so dass die Hochtemperaturmodifikation auch bei Raumtemperatur metastabil erhalten bleibt. Als entsprechend stabilisierende Oxide sind beispielsweise MgO, CaO, Y₂O₃ oder Oxide seltener Erden bekannt. Beispielsweise kann durch einen Zusatz zu ZrO₂ von wenigstens 16 Mol-% CaO, wenigstens 16 Mol-% MgO oder wenigstens 8 Mol-% Y₂O₃ die kubische Modifikation bis zur Raumtemperatur metastabil erhalten bleiben. Solch vollständig stabilisiertes ZrO₂ wird auch als vollstabilisiertes ZrO₂ (FSZ, "Fully Stabilized Zirconia") bezeichnet. Soweit ZrO₂ durch Zusätze stabilisierender Oxide nur in solchen Anteilen stabilisiert ist, dass die kubische Modifikation nur teilweise bis zur Raumtemperatur metastabil erhalten bleibt, wird auch von teilstabilisiertem ZrO₂ gesprochen (PSZ, "Partly Stabilized Zirconia").

Vollstabilisiertes ZrO₂ weist eine lineare Wärmeausdehnung auf, während teilstabilisiertes ZrO₂ je nach Abhängigkeit von noch monoklinen Anteilen des ZrO₂ nur einen mehr oder weniger stark ausgeprägten Volumensprung bei Über- beziehungsweise Unterschreiten der Umwandlungstemperatur aufweist. Entsprechend voll- oder teilstabilisiertes ZrO₂ eignet sich daher als Werkstoff für feuerfeste Erzeugnisse.

Nachteilig an voll- oder teilstabilisiertem ZrO₂ gegenüber reinem ZrO₂ ist jedoch, dass die Korrosionsbeständigkeit sowie die chemische Beständigkeit von voll- oder teilstabilisiertem ZrO₂ gegenüber reinem ZrO₂ vermindert ist. Dies liegt insbesondere daran, dass die stabilisierenden Zusätze mit Stoffen, mit denen das feuerfeste Erzeugnis bei seinem Einsatz in Kontakt tritt, niedrig schmelzende Phasen bilden, die aus dem Erzeugnis gelöst werden. Bei solchen Stoffen kann es sich insbesondere um Bestandteile der Stahlschmelze oder der Schlacke handeln, die mit stabilisierenden Zusätzen in Form von CaO, MgO oder Y₂O₃ niedrig schmelzende Phasen bilden.

Die hervorragende Korrosionsbeständigkeit von ZrO₂ wird durch stabilisierende Zusätze insoweit reduziert.

Durch CaO, MgO oder Y₂O₃ in tetragonaler und/oder kubischer Modifikation stabilisiertes ZrO₂ wird beispielsweise in JP 2005 289721 A, EP 0 908 425 A1, DE 10 2012 101 741 A1, WO 2010/127810 A1 oder US 2009/233081 A1 beschrieben. Zur Stabilisierung des ZrO₂ durch Y₂O₃ werden darin beispielsweise Anteile an Y₂O₃ im Bereich von 1,5 bis 4 Mol-% oder im Bereich von 2 bis 8 Mol-% genannt. Zur Stabilisierung des ZrO₂ durch CaO werden beispielsweise Anteile an CaO im Bereich von 3 bis 25 Masse-% offenbart.

Der Erfindung liegt die Aufgabe zugrunde ein ZrO₂ sowie, ein ZrO₂ umfassendes feuerfestes Erzeugnis, insbesondere ein feuerfestes keramisches Erzeugnis, zur Verfügung zu stellen, bei welchem das ZrO₂ keine oder nur eine geringfügig ausgeprägte anormale Wärmedehnung beim Über- beziehungsweise Unterschreiten der Umwandlungstemperatur von der Tieftemperaturphase in die Hochtemperaturphasen aufweist, gleichzeitig jedoch gegenüber dem aus dem Stand der Technik bekannten voll- oder teilstabilisiertem ZrO₂ eine verbesserte Korrosionsbeständigkeit aufweist.

Eine weitere Aufgabe der Erfindung besteht darin, ein Verfahren zur Herstellung eines solchen feuerfesten Erzeugnisses sowie ein danach hergestelltes feuerfestes Erzeugnis zur Verfügung zu stellen.

Zur Lösung der erstgenannten Aufgabe wird erfindungsgemäß zur Verfügung gestellt ein Zirkoniumdioxid in Form einer bei Raumtemperatur metastabilen Mineralphase in kubischer Modifikation mit einem Anteil an Calcium, Magnesium und Yttrium unter 1 Masse-% sowie ein feuerfestes Erzeugnis, umfassend ein solches Zirkoniumdioxid.

Die Gesamtmasse der Elemente Calcium, Magnesium und Yttrium in dem erfindungsgemäßen Zirconiumdioxid liegt damit unter 1 Masse-%, bezogen auf die Gesamtmasse des Zirconiumdioxids.

Erfindungsgemäß wurde erkannt, dass Zirconiumdioxid, das bei Raumtemperatur eine stabile Mineralphase in kubischer Modifikation mit einem Anteil an Calcium, Magnesium und Yttrium unter 1 Masse-% bildet (nachfolgend auch als "erfindungsgemäßes Zirconiumdioxid" bezeichnet), einen hervorragenden Rohstoff auf Basis ZrO₂ für feuerfeste Erzeugnisse, insbesondere für feuerfeste keramische Erzeugnisse, bildet, da ein solches Zirconiumdioxid keine oder eine nur sehr gering ausgebildete anomale Wärmedehnung und gleichzeitig gegenüber dem aus dem Stand der Technik bekannten teil- oder vollstabilisiertem ZrO₂ eine verbesserte Korrosionsbeständigkeit aufweist.

Die fehlende oder nur sehr gering ausgeprägte anomale Wärmedehnung des bei Raumtemperatur stabilen Zirconiumdioxids in kubischer Modifikation ist dadurch bedingt, dass dieses im Temperaturbereich zwischen Raumtemperatur und 2.370° C stets in kubischer Modifikation vorliegt und daher keinerlei Umwandlung der Modifikationen erfährt. Die gegenüber dem aus dem Stand der Technik bekannten, teil- oder vollstabilisierten Zirconiumdioxid verbesserte Korrosionsbeständigkeit des erfindungsgemäßen Zirconiumdioxids ist dadurch begründet, dass der Anteil an Calcium, Magnesium und Yttrium in dem bei Raumtemperatur stabilen Zirconiumdioxid in kubischer Modifikation auf Anteile unter 1 Masse-% begrenzt ist.

Um die Korrosionsbeständigkeit des erfindungsgemäßen Zirconiumdioxids weiter zu verbessern, kann erfindungsgemäß vorgesehen sein, dass der Anteil an Calcium, Magnesium und Yttrium in dem erfindungsgemäßen Zirconiumdioxid auch auf unter 0,9 Masse-%, 0,8 Masse-%, 0,7 Masse-%, 0,6 Masse-%, 0,5 Masse-% oder unter 0,4 Masse-% begrenzt ist, jeweils bezogen auf die Gesamtmasse des erfindungsgemäßen Zirconiumdioxids. Allerdings ist es kaum möglich, das erfindungsgemäße Zirconiumdioxid in chemisch reiner Form zur Verfügung zu stellen, so dass der Anteil an Calcium, Magnesium und Yttrium in dem erfindungsgemäßen Zirconiumdioxid beispielsweise wenigstens 0,1 Masse-%, 0,2 Masse-% oder 0,3 Masse-%, jeweils bezogen auf die Gesamtmasse des erfindungsgemäßen Zirconiumdioxids, betragen kann.

Nach einer Fortführung des Erfindungsgedankens kann vorgesehen sein, dass der Anteil an Fremdoxiden in dem erfindungsgemäßen Zirconiumdioxid unter 1,5 Masse-% liegt. Unter "Fremdoxiden" werden insoweit sämtliche Oxide verstanden, die nicht ZrO₂ oder HfO₂ sind (da natürliche Zirkonrohstoffe bekanntermaßen stets geringe Anteile an HfO₂ enthalten), insbesondere also auch die aus dem Stand der Technik bekannten stabilisierenden Zusätze in Form von CaO, MgO, Y₂O₃ und Oxiden seltener Erden.

Erfindungsgemäß wurde erkannt, dass die Korrosionsbeständigkeit des erfindungsgemäßen Zirconiumdioxids noch weiter verbessert wird, wen erfindungsgemäß vorgesehen sein, dass der der Anteil an Fremdoxiden in dem erfindungsgemäßen Zirconiumdioxid unter 1,5 Masse-% liegt, also beispielsweise auch auf unter 1,4 Masse-%, 1,3 Masse-%, 1,2 Masse-%, 1,1 Masse-%, 1,0 Masse-%, 0,9 Masse-%, 0,8 Masse-%, 0,7 Masse-% oder unter 0,6 Masse-% begrenzt ist, jeweils bezogen auf die Gesamtmasse des erfindungsgemäßen Zirconiumdioxids. Der Anteil an Fremdoxiden kann aus den oben genannten Gründen beispielsweise ferner wenigstens 0,1 Masse-%, 0,2 Masse-% oder wenigstens 0,3 Masse-%, jeweils bezogen auf die Gesamtmasse des erfindungsgemäßen Zirconiumdioxids, betragen.

Das erfindungsgemäße Zirconiumdioxid kann insbesondere in Form von Einkristalliten vorliegen. Insoweit kann das erfindungsgemäße Zirconiumdioxid insbesondere auch in Körnern aus Zirconiumdioxid vorliegen, die Einkristallite in Form des erfindungsgemäßen Zirconiumdioxids umfassen.

Soweit Körner aus Zirconiumdioxid erfindungsgemäßes Zirconiumdioxid neben nicht erfindungsgemäßem Zirconiumdioxid umfassen, kann erfindungsgemäß bevorzugt vorgesehen sein, dass solche Körner aus Zirconiumdioxid erfindungsgemäßes Zirconiumdioxid zu wenigstens 50 Masse-% umfassen, bezogen auf die Gesamtmasse der Körner aus Zirconiumdioxid, also beispielsweise auch zu wenigstens 60 Masse-%, 70 Masse-%, 80 Masse-%, 90 Masse-% oder auch zu wenigstens 95 Masse-%.

Erfindungsgemäß kann ferner bevorzugt vorgesehen sein, dass das erfindungsgemäße feuerfeste Erzeugnis, soweit dieses erfindungsgemäßes Zirconiumdioxid neben nicht erfindungsgemäßem Zirconiumdioxid umfasst, erfindungsgemäßes Zirconiumdioxid zu wenigstens 50 Masse-% umfasst, bezogen auf die Gesamtmasse des Zirconiumdioxids in dem Erzeugnis, also beispielsweise auch zu wenigstens 60 Masse-%, 70 Masse-%, 80 Masse-%, 90 Masse-% oder auch zu wenigstens 95 Masse-%. Das Zirconiumdioxid kann in den erfindungsgemäßen Erzeugnissen bevorzugt in Form von Körnern aus Zirconiumdioxid, die insbesondere wie vorstehend beschrieben ausgebildet sein können, vorliegen.

Erfindungsgemäß wurde erkannt, dass das erfindungsgemäße Zirconiumdioxid beziehungsweise ein erfindungsgemäßes Zirconiumdioxid umfassendes erfindungsgemäßes Erzeugnis jeweils besonders gute feuerfeste Eigenschaften aufweist, insbesondere eine hervorragende Korrosionsbeständigkeit, wenn das erfindungsgemäße Zirconiumdioxid Einkristallite mit einer Größe im Bereich von 30 bis 1.000 µm bildet, insbesondere im Bereich von 40 bis 1.000 µm, von 50 bis 1.000 µm oder im Bereich von 60 bis 1.000 µm.

Bevorzugt kann daher beispielsweise vorgesehen sein, dass Körner aus Zirconiuimdioxid zu wenigstens 50 Masse-% erfindungsgemäßes Zirconiumdioxid in Form von Einkristalliten mit einer Größe im Bereich von 30 bis 1.000 µm, im Bereich von 40 bis 1.000 µm, im Bereich von 50 bis 1.000 µm oder im Bereich von 60 bis 1.000 µm umfassen, also beispielsweise auch zu wenigstens 60, 70, 80, 90 oder 95 Masse-%, jeweils bezogen auf die Gesamtmasse des Korns aus Zirconiumdioxid.

Erfindungsgemäß wird mit "Zirconiumdioxid" das Oxid Zirconium(IV)-Oxid, also ZrO₂ bezeichnet.

Als "nicht erfindungsgemäßes Zirconiumdioxid" wird hierin insbesondere Zirconiumdioxid verstanden, das nicht die hierin offenbarten Merkmale des erfindungsgemäßen Zirconiumdioxids aufweist.

Bei dem erfindungsgemäßen feuerfesten Erzeugnis kann es sich insbesondere um ein geformtes Erzeugnis handeln, insbesondere ein Verschleißteil, besonders bevorzugt um ein Verschleißteil beim Stahlstrangguss. In einem solchen Erzeugnis beziehungsweise Verschleißteil kann das erfindungsgemäße Zirconiumdioxid insbesondere in den Bereichen vorliegen, in denen das Erzeugnis in Kontakt mit der Schlacke tritt oder an denen das Erzeugnis in Kontakt mit der Stahlschmelze mit einer hohen Strömungsgeschwindigkeit tritt, wie beispielsweise im Eintauchbereich des Pfannenverteilerrohres, am Durchlass einer Schieberplatte, an der Stopfennase sowie im Einlauf- und Eintauchbereichs des Eintauchausgusses. Insoweit kann es sich bei dem erfindungsgemäßen Erzeugnis beispielsweise um ein Pfannenverteilerrohr, eine Schieberplatte, einen Monoblockstopfen, eine Düse oder einen Eintauchausguss handeln.

Bei dem erfindungsgemäßen Erzeugnis kann es sich insbesondere um ein Erzeugnis handeln, das durch isostatisches Pressen geformt worden ist.

In dem erfindungsgemäßen Erzeugnis kann das erfindungsgemäße Zirconiumdioxid beispielsweise in einer Kohlenstoffmatrix vorliegen. Die Kohlenstoffmatrix kann insbesondere in Form von Graphit vorliegen.

Grundsätzlich kann es sich bei dem erfindungsgemäßen Erzeugnis jedoch um ein beliebiges feuerfestes Erzeugnis handeln, also beispielsweise auch um ein feuerfestes keramisches Erzeugnis, also ein gesintertes feuerfestes Erzeugnis in Form miteinander versinterter Körner. Insoweit kann das erfindungsgemäße Zirconiumdioxid im erfindungsgemäßen Erzeugnis beispielsweise in Form versinterter Körner vorliegen.

Zur Herstellung des erfindungsgemäßen Zirconiumdioxids kann zunächst von einem aus der Stand der Technik bekannten teil- oder vollstabilisierten Zirconiumdioxid ausgegangen werden. Das erfindungsgemäße Zirconiumdioxid kann nunmehr erhalten werden durch einen Brand von solchem, durch Stabilisierungszusätze teil- oder vollstabilisierten Zirconiumdioxid in reduzierender Atmosphäre unter Anwesenheit eines gasförmigen Reaktanten für die Stabilisierungszusätze und anschließendes Abkühlen.

Das dem Brand zugrunde liegende, durch Stabilisierungszusätze teil- oder vollstabilisierte Zirconiumdioxid kann insbesondere durch Stabilisierungszusätze in Form wenigstens eines der folgenden Stoffe stabilisiert sein: CaO, MgO, Y₂O₃ oder Oxide seltener Erden.

Im Übrigen kann es sich bei dem teil- oder vollstabilisierten Zirconiumdioxid um ein teil- oder vollstabilisiertes Zirconiumdioxid gemäß dem Stand der Technik handeln.

Zur Herstellung des erfindungsgemäßen Zirconiumdioxids wird dieses nunmehr in reduzierender Atmosphäre unter Anwesenheit eines gasförmigen Reaktanten für die Stabilisierungszusätze gebrannt. Die reduzierende Atmosphäre kann bevorzugt einen Sauerstoffpartialdruck unter 10⁻⁶ Pa aufweisen, also beispielsweise auch einen Sauerstoffpartialdruck unter 10⁻⁷ oder 10⁻⁸ Pa. Die reduzierende Atmosphäre kann, wie aus dem Stand der Technik bekannt, beispielsweise dadurch erzeugt werden, dass das teil- oder vollstabilisiertes Zirconiumdioxid in Anwesenheit von Kohlenstoff, beispielsweise in Form von Graphit, Koks oder Kohle, gebrannt wird, bevorzugt in einem geschlossenen Ofenraum. Hierzu kann das teil- oder vollstabilsierte Zirconiumdioxid beispielsweise auf ein Bett aus einem solchen Kohlenstoffträger gelegt oder mit einem solchen Kohlenstoffträger gemischt werden.

Ein wesentlicher Schritt bei diesem Herstellungsverfahren zur Herstellung des bei Raumtemperatur stabilen Zirconiumdioxids in kubischer Modifikation mit einem Anteil an Fremdoxiden im erfindungsgemäßen Umfang liegt nunmehr darin, dass der reduzierende Brand des voll- oder teilstabilisierten Zirconiumdioxids bei gleichzeitiger Anwesenheit eines gasförmigen Reaktanten für die Stabilisierungszusätze stattfindet. Denn dieser gasförmige Reaktant bildet während des reduzierenden Brandes des Zirconiumdioxids Verbindungen mit den Stabilsierungszusätzen des Zirconiumdioxids, wodurch die Stabilisierungszusätze zumindest teilweise, bevorzugt überwiegend aus dem Zirconiumdioxid entfernt werden. Nach Abkühlen des Zirconiumdioxids ist der Anteil der Stabilisierungszusätze in dem Zirconiumdioxid hierdurch gegenüber dem Anteil an Stabilisierungszusätzen vor dem Brand reduziert, so dass die Korrosionsbeständigkeit des Zirconiumdioxids gegenüber dessen Korrosionsbeständigkeit vor dem Brand wesentlich erhöht ist. Gleichzeitig bleibt die kubische Hochtemperaturmodifikation des Zirconiumdioxids, trotz der zumindest teilweisen Entfernung der Stabilisierungszusätze, auch bei Raumtemperatur metastabil erhalten. Insgesamt erhält man durch dieses Herstellungsverfahren demnach das erfindungsgemäße Zirconiumdioxid, das trotz des geringen Anteils an Stabilisierungszusätzen bei Raumtemperatur eine metastabile Mineralphase in kubischer Modifikation ausbildet.

Bei dem gasförmigen Reaktanten, der während des reduzierenden Brandes des Zirconiumdioxids mit den Stabilisierungszusätzen reagiert, kann es sich grundsätzlich um einen beliebigen Stoff oder eine Mischung von Stoffen handeln, die während des Brandes in Gasform in der Ofenatmosphäre vorliegen und mit wenigstens einem, bevorzugt jedoch sämtlichen Stabilisierungszusätzen eine Reaktion eingehen.

Nach einer besonders bevorzugten Ausführungsform liegt ein gasförmiger Reaktant in Form von Silizium und/oder Aluminium umfassendem Gas vor. Um ein solch silizium- und/oder aluminiumhaltiges Gas während des reduzierenden Brandes des Zirconiumdioxids zur Verfügung zu stellen, kann dem Ofenraum neben dem Zirconiumdioxid und dem Kohlenstoffträger metallisches Silizium und/oder Aluminium zugegeben werden, das während des reduzierenden Brandes silizium- und/oder aluminiumhaltiges Gas bildet. Das Silizium des siliziumhaltigen Gases beziehungsweise das Aluminium des aluminiumhaltigen Gases reagiert während des Brandes insbesondere mit Stabilisierungszusätzen in Form von Calciumoxid, Magnesiumoxid oder Yttriumoxid, so dass diese Stabilisierungszusätze zumindest teilweise aus dem Zirconiumdioxid entfernt werden.

Alternativ oder kumulativ kann ein gasförmiger Reaktant beispielsweise in Form von Kohlenmonoxid vorliegen, der sich während des Brandes aus dem Kohlenstoffträger bilden kann. Insofern kann ein gasförmige Reaktant beispielsweise in Form wenigstens einer der gasförmigen Stoffe Silizium, Aluminium oder Kohlenmonoxid vorliegen.

Der reduzierende Brand wird bevorzugt bei Temperaturen in einem Temperaturbereich ausgeführt, bei denen das Zirconiumdioxid zumindest teilweise in seine kubische Modifikation überführt wird, also bevorzugt bei Temperaturen oberhalb von 1.173° C. Es kann auch vorgesehen sein, dass der reduzierende Brand bei Temperaturen oberhalb von 2.370° C durchgeführt wird, so dass das Zirconiumdioxid vollständig in seine kubische Modifikation übergeführt ist. In letzterem Fall kann das Zirconiumdioxid nach dem Abkühlen weitgehend oder vollständig in einer bei Raumtemperatur (meta-)stabilen kubischen Modifikation vorliegen. Der Brand wird bei Temperaturen unterhalb der Schmelztemperatur von Zirconiumdioxid durchgeführt, also unterhalb von 2.690° C.

Der Umfang der Stabilisierungszusätze, die während des reduzierenden Brandes eine Reaktion mit dem gasförmigen Reaktanten eingehen, hängt insbesondere von der Dauer des reduzierenden Brandes ab. Dabei nimmt der Anteil der Stabilisierungszusätze, die während des reduzierenden Brandes eine Reaktion mit dem gasförmigen Reaktanten eingehen, mit zunehmender Brenndauer zunächst zu, bis sich bei einer bestimmten Temperatur ein Gleichgewicht eingestellt hat. Erfindungsgemäß hat sich herausgestellt, dass eine Brenndauer im Bereich von etwa 12 Stunden ausreichend ist, einen so hohen Anteil der Stabilisierungszusätze mit dem gasförmigen Reaktanten reagieren zu lassen, dass das Zirconiumdioxid einen Anteil an Calcium, Magnesium und Yttrium unter 1 Masse-% aufweist, so dass man das erfindungsgemäße Zirconiumdioxid mit einer hervorragenden Korrosionsbeständigkeit erhält. Erfindungsgemäß hat sich herausgestellt, dass das durch ein solches Verfahren hergestellte, erfindungsgemäße Zirconiumdioxid weitgehend Kristallite ausbildet, die eine durchschnittliche Größe von unter 30 µm aufweisen. Wie zuvor ausgeführt, weisen jedoch insbesondere solche Kristallite des erfindungsgemäßen Zirconiumdioxids vorteilhafte Eigenschaften auf, die in einer Größe oberhalb von 30 µm, insbesondere oberhalb von 40 µm, 50 µm oder oberhalb von 60 µm vorliegen. Aus diesem Grund kann erfindungsgemäß vorgesehen sein, dass das gemäß dem vorstehenden Verfahren hergestellte, erfindungsgemäße Zirconiumdioxid einer weiteren Temperaturbeaufschlagung unterworfen wird, während derer die Kristallite zu größeren Kristalliten beziehungsweise Einkristallen zusammenwachsen. Bevorzugt kann erfindungsgemäß vorgesehen sein, das gemäß dem vorstehenden Verfahren hergestelltes, erfindungsgemäßes Zirconiumdioxid bei Temperaturen oberhalb von 900° C, insbesondere beispielsweise im Temperaturbereich von 900 bis 1.500° C, mit Temperatur zu beaufschlagen, so dass die Kristallite aus Zirconiumdioxid zu größeren Kristalliten beziehungsweise Einkristallen mit einer Größe im Bereich von 30 bis 1.000 µm, insbesondere im Bereich von 40 m bis 1.000m, von 50 µm bis 1.000 mm oder im Bereich von 60 µm bis 1.000 µm zusammenwachsen.

Gegenstand der Erfindung ist ferner das hierin beschriebene, erfindungsgemäße Zirconiumdioxid in Form einer bei Raumtemperatur metastabilen Mineralphase in kubischer Modifikation mit einem Anteil an Calcium, Magnesium und Yttrium unter 1 Masse-%.

Gegenstand der Erfindung ist ferner die Verwendung einer bei Raumtemperatur metastabilen Mineralphase in Form von Zirconiumdioxid in kubischer Modifikation mit einem Anteil an Calcium, Magnesium und Yttrium unter 1 Masse-% als Rohstoff für die Herstellung von feuerfesten Erzeugnissen.

Das verwendete Zirconiumdioxid kann die hierin beschriebenen Merkmale aufweisen und die Verwendung kann wie hierin beschrieben, erfolgen.

Gegenstand der Erfindung ist ferner ein Verfahren zur Herstellung eines bei Raumtemperatur metastabilen Zirconiumdioxids in kubischer Modifikation mit einem Anteil an Calcium, Magnesium und Yttrium unter 1 Masse-%, wie hierin beschrieben.

Ferner ist Gegenstand der Erfindung ein Verfahren zur Herstellung eines feuerfesten Erzeugnisses, umfassend die folgenden Schritte
- zur Verfügungstellung einer bei Raumtemperatur metastabilen Mineralphase in Form von Zirconiumdioxid in kubischer Modifikation mit einem Anteil an Calcium, Magnesium und Yttrium unter 1 Masse-%;
- Zusammenfügen der bei Raumtemperatur metastabilen Mineralphase in Form von Zirconiumdioxid in kubischer Modifikation mit einem Anteil an Calcium, Magnesium und Yttrium unter 1 Masse-% mit einem oder mehreren weiteren feuerfesten Rohstoffen;
- Pressen eines Formkörpers aus dem Zirconiumdioxid und den weiteren feuerfesten Rohstoffen;
- Brennen des Formkörpers zu einem feuerfesten Erzeugnis.

Bei dem erfindungsgemäßen Verfahren wird somit zunächst ein feuerfester Rohstoff zur Verfügung gestellt, der dem erfindungsgemäßen Zirconiumdioxid entspricht oder dieses umfasst. Dieser Rohstoff kann ausschließlich verwendet werden oder mit einem oder mehreren weiteren feuerfesten Rohstoffen zusammengefügt werden, beispielsweise mit feuerfesten Rohstoffen auf Basis wenigstens eines der folgenden Stoffe: Al₂O₃, MgO, SiO₂, Cr₂O₃ oder Kohlenstoff.

Die Rohstoffe werden anschließend zu einem Formkörper gepresst, also einem sogenannten Grünkörper, insbesondere beispielsweise durch isostatisches Pressen.

Der Grünkörper kann anschließend einem Brand unterworfen werden, woraufhin man nach Abkühlen ein feuerfestes Erzeugnis erhält.

Wie zuvor ausgeführt, weist ein erfindungsgemäßes feuerfestes Erzeugnis, insbesondere auch soweit dieses durch das erfindungsgemäße Verfahren hergestellt ist, bevorzugt Körner beziehungsweise Einkristalle des erfindungsgemäßen Zirconiumdioxids in einer Größe im Bereich von 30 bis 1.000 µm auf. Soweit der gemäß dem erfindungsgemäßen Verfahren gepresste Formkörper vor dem Brand vorwiegend erfindungsgemäßes Zirconiumdioxid aufweist, das aus Körnern beziehungsweise Einkristallen mit einer darunter liegenden Größe gebildet ist, kann erfindungsgemäß vorgesehen sein, ein Verfahrensschritt ausgeführt wird, um die Größe der Kristallite des erfindungsgemäßen Zirconiumdioxids zu erhöhen. Dieser Verfahrensschritt kann, wie oben ausgeführt, darin bestehen, dass der gepresste Formkörper mit einer Temperatur beaufschlagt wird, bei der die Kristallgröße der Kristallite beziehungsweise Einkristalle des erfindungsgemäßen Zirconiumdioxids wächst. Insbesondere kann die Temperaturbeaufschlagung bei einer solchen Temperatur und für eine solche Dauer erfolgen, dass das Zirconiumdioxid zu Kristalliten mit einer Größe vorwiegend im Bereich von 30 bis 1.000 µm wächst. Die Temperaturbeaufschlagung kann dabei beispielsweise bei einer Temperatur im Bereich von 900 bis 1.500 °C und für eine Dauer von beispielsweise etwa 72 Stunden erfolgen.

Dieser Verfahrensschritt des Temperaturbeaufschlagens für das Kristallwachstum kann beispielsweise zwischen dem Pressen und Brennen des Formkörpers ausgeführt werden. Dies kann beispielsweise der Fall sein, soweit ein feuerfestes keramisches Erzeugnis hergestellt wird, also ein feuerfestes Erzeugnis mit einer keramischen Bindung, bei dem der keramische Brand zur Versinterung der Körner bei einer Temperatur oberhalb von 1.500 °C ausgeführt wird.

Alternativ kann dieser Verfahrensschritt des Temperaturbeaufschlagens gleichzeitig mit dem Brand des Formkörpers zu einem feuerfesten Erzeugnis erfolgen. Dies kann beispielsweise der Fall sein, soweit ein feuerfestes Erzeugnis mit einer Kohlenstoffbindung hergestellt wird, bei dem der Brand zum Verkoken des Kohlenstoffs und zur Herstellung einer Kohlenstoffbindematrix in dem besagten Temperaturbereich durchgeführt wird.

Weitere Merkmale der Erfindung ergeben sich aus den Ansprüchen, den beigefügten Figuren und zugehörigen Erläuterungen sowie dem Ausführungsbeispiel.

Sämtliche der hierin offenbarten Merkmale der Erfindung können, einzeln oder in Kombination, beliebig miteinander kombiniert sein.

Ein Ausführungsbeispiel des erfindungsgemäßen Verfahrens sowie eines erfindungsgemäßen feuerfesten Erzeugnisses, das nach dem Verfahren gemäß dem Ausführungsbeispiel hergestellt wurde, wird nachfolgend näher erläutert.

Das im Ausführungsbeispiel beschriebene Verfahren dient zur Herstellung eines feuerfesten Erzeugnisses in Form eines Eintauchausgusses für einen Tundish beim Stahlstrangguss.

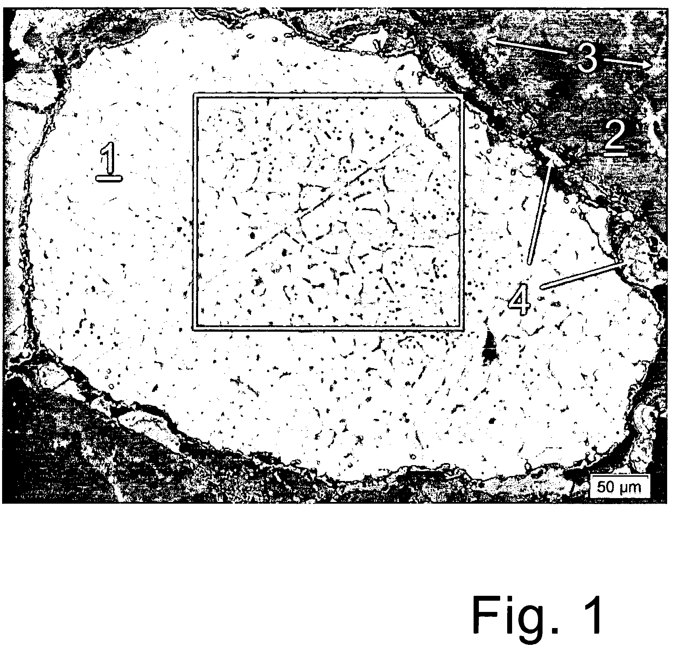

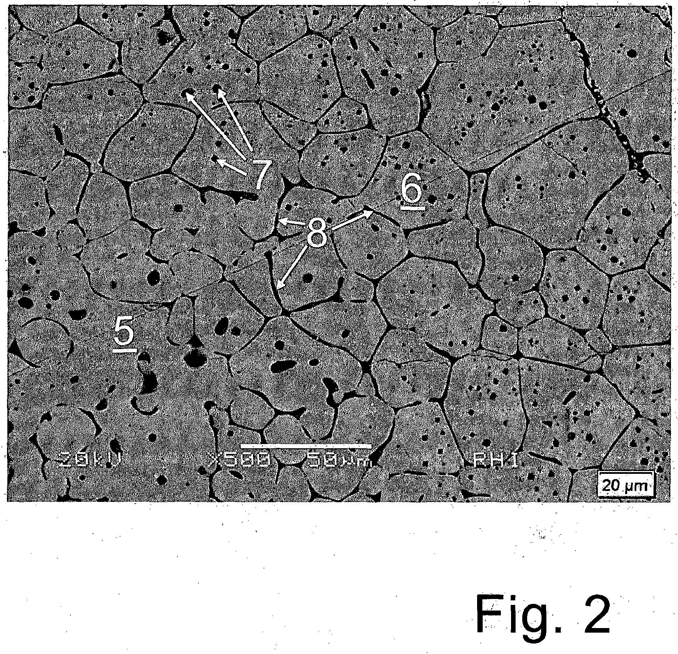

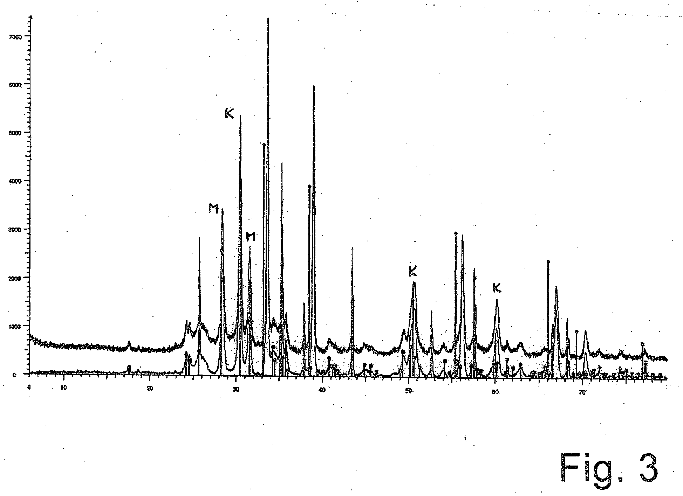

Zur Herstellung des Eintauchausgusses wird zunächst zur Verfügung gestellt ein Rohstoff in Form einer bei Raumtemperatur stabilen Mineralphase in Form von Zirconiumdioxid in kubischer Modifikation mit einem Anteil an Calcium von etwa 0,4 Masse-%. Um einen solchen Rohstoff zur Verfügung zu stellen, wird zunächst Zirconiumdioxid, das durch einen Anteil an Calciumoxid von etwa 4-5 Masse-% (entsprechend einem Anteil an Calcium von etwa 2,8-3,6 Masse-%) teilstabilisiert ist, in reduzierender Atmosphäre unter Anwesenheit von silizium- und aluminiumhaltigem Gas gebrannt und anschließend abgekühlt. Konkret wird dieses teilstabilisierte Zirconiumdioxid als körniges Gut mit Kohlegries und körnigem, metallischem Silizium und Aluminium gemischt und anschließend in einem geschlossenen Ofenraum bei einer Temperatur von etwa 1.500° C für etwa 8 Stunden gebrannt. Der Kohlegries erzeugt dabei eine reduzierende Atmosphäre, so dass der Sauerstoffpartialdruck im Ofenraum etwa 10⁻⁷ Pa beträgt. Gleichzeitig wird aus dem körnigem Silizium und Aluminium während des Brandes silizium- und aluminiumreiches Gas gebildet, das mit Anteilen des Calciumoxids des teilstabilisierten Zirconiumdioxids reagiert. Der Anteil an Calcium im stabilisierten Zirconiumdioxid wird hierdurch während des Brandes auf einen Anteil von durchschnittlich unter 0,5 Masse-% reduziert. Während des Brandes wird das im kubischen Zirconiumdioxid enthaltende Calciumoxid entfernt; dennoch bleibt das kubische Zirconiumdioxid nach weitgehendem Entfernen des Calciumoxids metastabil enthalten (siehe Figur 3). Das entsprechend ausgebildete Zirconiumdioxid bildet nach dem Brand Kristallite aus, die vorwiegend eine Größe unter 30 µm aufweisen (siehe Schliffbilder gemäß Figuren 1 und 2). Das entsprechend ausgebildete Zirconiumdioxid wird anschließend unter Zugabe eines organischen Binders mit einem feuerfesten Rohstoff in Form von Graphit gemischt. Diese Mischung wird ferner mit einem feuerfesten Rohstoff in Form von Alumina-Graphit (Al₂O₃-C) zusammengefügt und durch isostatisches Pressen zu einem Formkörper in Form eines ungebrannten Eintauchausgusses geformt. Dabei bildet die Mischung aus Zirconiumdioxid und Graphit eine Teilbeschichtung des Eintauchausgusses an solchen Bereichen, die im Einsatz in Kontakt mit der Stahlschmelze treten.

Der entsprechend gebildete Formkörper wird anschließend bei einer Temperatur im Bereich von etwa 900 bis 1.000° C gebrannt, so dass der Binder verkokt und jeweils eine Kohlenstoffbindung beziehungsweise Kohlenstoffmatrix ausbildet. Gleichzeitig erfolgt die Temperaturbeaufschlagung in diesem Temperaturbereich für eine solche Dauer, dass das Zirconiumdioxid zu Kristalliten mit einer Größe, die überwiegend im Bereich zwischen 50 und 1.000 µm liegt, wächst. Nach dem Abkühlen erhält man ein feuerfestes Erzeugnis in Form eines Eintauchausgusses.

Die beigefügten Figuren 1 und 2 zeigen Schliffbilder des gemäß dem Ausführungsbeispiel gebildeten Zirconiumdioxids nach dem vorbeschriebenen ersten Brand bei 1.500 °C und vor der Weiterverarbeitung und dem zweiten Brand bei 900 bis 1.000 °C.

Konkret zeigt
- Figur 1: eine Ansicht auf einen Anschliff eines Kornes aus Zirconiumdioxid, das erfindungsgemäßes Zirconiumdioxid gemäß dem Ausführungsbeispiel umfasst,
- Figur 2: eine Detailansicht der Ansicht gemäß Figur 1,
- Figur 3: das Ergebnis einer röntgendiffraktometrischen Messung des Zirconiumdioxids gemäß dem Ausführungsbeispiel und
- Figur 4: eine Ansicht auf einen Anschliff eines Kornes aus Zirconiumdioxid, das erfindungsgemäßes Zirconiumdioxid gemäß umfasst, jedoch in einer Abwandlung des Ausführungsbeispiels hergestellt worden ist.

Figur 1 zeigt einen Ausschnitt einer Ansicht auf einen Anschliff eines Kornes aus Zirconiumdioxid 1, das praktisch ausschließlich erfindungsgemäßes Zirconiumdioxid umfasst und durch das Verfahren gemäß dem Ausführungsbeispiel erhalten wurde. Der Ausschnitt hat eine Größe von etwa 600 x 450 µm. Der schwarze Balken unten rechts im Bild entspricht einer Länge von 100 µm. Das Korn 1 ist, wie im Ausführungsbeispiel beschrieben, noch in seine Umgebung 2 aus körnigem Kohlegries sowie Silizium und Aluminium eingebettet, die in Figur 1 dunkel erscheinen. Dunkelgraue Einschlüsse 3 in der dunklen Umgebung 2 sind Einschlüsse aus Siliziumcarbid, die sich während des Brandes aus Silizium und dem Kohlenstoff des Kohlegrieses gebildet haben. Die unregelmäßigen, helleren Bereiche 4, die das Korn 1 atollförmig umgeben, bestehen vorwiegend aus Zirkon-Carbonitrid, das sich während des Brandes aus dem Zirconium des Zirconiumdioxids, dem Kohlenstoff des Kohlegries sowie Luftsauerstoff gebildet hat.

Das Korn 1 weist zahlreiche Einkristallite aus Zirconiumdioxid auf. Die Grenzen zwischen den Einkristalliten sind in Figur 1 als dünne schwarze, netzförmige Bereiche innerhalb des Kornes 1 zu erkennen. Der weiß umrandete Ausschnitt innerhalb des Kornes 1 ist in Figur 2 vergrößert dargestellt.

In dem vergrößerten Ausschnitt des Kornes 1 gemäß Figur 2 sind die zahlreichen Einkristallite deutlich zu erkennen. Der weiße Balken unten in der Bildmitte entspricht einer Länge von 50 µm. Zwei der Einkristallite, die in Figur 2 mit den Bezugszeichen 5 und 6 gekennzeichnet sind, wurden hinsichtlich ihrer elementaren Zusammensetzung näher untersucht. Ferner wurde das Korn 1 zur Bestimmung seiner kristallographischen Zusammensetzung röntgendiffraktometrisch untersucht.

Die Untersuchung der Einkristallite 5 und 6 ergab deren folgende elementare Zusammensetzung, jeweils in Masse-% der betreffenden Elemente, bezogen auf den jeweiligen Einkristall:

| Einkristall Nr. | Zr | O | Hf | Ca | Mg | Y | Al | Si | N | C |
|---|---|---|---|---|---|---|---|---|---|---|
| 5 | 73,6 | 24,32 | 1,56 | 0,0 | 0,0 | 0,0 | 0,0 | 0,0 | 0,0 | 0,52 |
| 6 | 72,4 | 20,9 | 1,4 | 0,66 | 0,0 | 0,0 | 0,0 | 0,0 | 4,24 | 0,4 |

Ferner wurden die schwarzen "Inseln" 7 innerhalb der Einkristallite sowie die dünnen schwarzen, netzförmigen Bereiche 8 die die Einkristallite jeweils umgeben, hinsichtlich ihrer elementaren Zusammensetzung näher untersucht. Dabei ergab sich, dass diese Bereiche 7, 8, im Gegensatz zu den Einkristalliten, hohe Konzentrationen an Calcium, Aluminium und Silizium sowie höhere Konzentrationen an Sauerstoff und geringere Konzentrationen an Zirconium als die Einkristallite aufwiesen. Anzunehmen ist daher, dass sich das zur Stabilisierung zunächst im Zirconiumdioxid vorliegende Calciumoxid durch Diffusionsvorgänge während des Brandes in diesen Inseln 7 innerhalb der Zirconiumdioxidkristalle und in den Bereichen 8 außerhalb der Zirconiumdioxidkristalle angereichert hat. Ferner ist anzunehmen, dass das metallisches Aluminium und Silizium während des Brandes oxidiert wurden und sich durch Diffusionsvorgänge ebenfalls in diesen Inseln 7 und Bereichen 8 angereichert haben.

Die röntgendiffraktometrische Untersuchung des gemäß dem Ausführungsbeispiel hergestellten Zirconiumdioxids, die in Figur 3 dargestellt ist, bestätigt, dass das gemäß dem Ausführungsbeispiel hergestellte Zirconiumdioxid vorwiegend kubisch und nur in geringem Maße monoklin vorliegt. Die Hauptpeaks des kubischen Zirconiumdioxid sind mit einem K und die Hauptpeaks des monoklinen Zirconiumdioxids mit einem M gekennzeichnet.

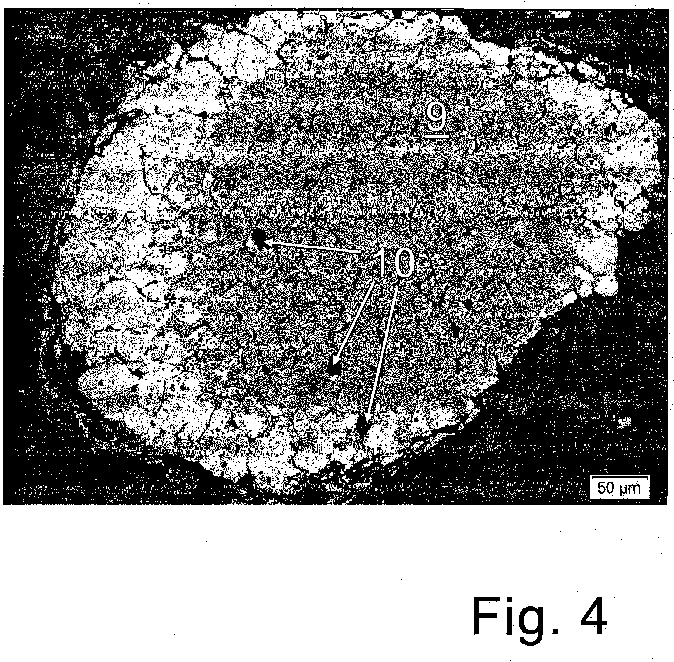

Figur 4 zeigt einen Ausschnitt einer Ansicht auf einen Anschliff eines Kornes 9 aus Zirconiumdioxid, das im wesentlichen gemäß dem Ausführungsbeispiel hergestellt wurde mit dem Unterschied, dass dieses nicht bei einer Temperatur von etwa 1.500° C für etwa 8 Stunden gebrannt wurde, sondern bei einer Temperatur von etwa 1.300 °C für etwa 24 Stunden. Deutlich zu erkennen ist, dass die Inseln 10 in den Zirkoniumoxidkristalliten, in denen sich unter anderem das Calciumoxid angereichert hat, größer sind und in einer geringeren Anzahl vorliegen als bei dem Zirconiumdioxid gemäß den Figuren 1 und 2. Dies ist auf die größere Brenndauer zurückzuführen, da dem Calciumdioxid hierdurch eine größere Diffusionszeit zur Verfügung stand.

## Patentansprüche

1. Zirconiumdioxid in Form einer bei Raumtemperatur metastabilen Mineralphase in kubischer Modifikation mit einem Anteil an Calcium, Magnesium und Yttrium unter 1 Masse-%.

2. Feuerfestes Erzeugnis, umfassend eine bei Raumtemperatur metastabile Mineralphase in Form von Zirconiumdioxid gemäß Anspruch 1.

3. Erzeugnis nach Anspruch 2, bei dem das Zirconiumdioxid in kubischer Modifikation Einkristallite mit einer Korngröße im Bereich von 30 bis 1.000 µm umfasst.

4. Erzeugnis nach wenigstens einem der Ansprüche 2 bis 3, bei dem das Zirconiumdioxid in Körnern aus Zirconiumdioxid vorliegt, die das Zirconiumdioxid zu wenigstens 50 Masse-% umfassen.

5. Erzeugnis nach wenigstens einem der Ansprüche 2 bis 4 in Form eines Verschleißteils beim Stahlstrangguss.

6. Erzeugnis nach wenigstens einem der Ansprüche 2 bis 5 in Form einer Schieberplatte, eines Monoblockstopfens, einer Düse, eines Tauchrohres oder eines Eintauchausgusses.

7. Erzeugnis nach wenigstens einem der Ansprüche 2 bis 6, bei dem das Zirconiumdioxid in einer Kohlenstoffmatrix vorliegt.

8. Erzeugnis nach wenigstens einem der Ansprüche 2 bis 7, bei dem das Zirconiumdioxid erhalten wurde durch Brand von durch Stabilisierungszusätze teil- oder vollstabilisiertem Zirconiumdioxid in reduzierender Atmosphäre unter Anwesenheit eines gasförmigen Reaktanten für die Stabilisierungszusätze und anschließendem Abkühlen.

9. Erzeugnis nach Anspruch 8 mit Stabilisierungszusätzen in Form wenigstens eines der folgenden Stoffe: Calciumoxid, Magnesiumoxid, Yttriumoxid oder Oxide seltener Erden.

10. Erzeugnis nach wenigstens einem der Ansprüche 8 bis 9, bei dem die reduzierende Atmosphäre einen Sauerstoffpartialdruck unter 10⁻⁶ Pa aufweist.

11. Erzeugnis nach wenigstens einem der Ansprüche 8 bis 10 mit einem gasförmigen Reaktanten in Form wenigstens eines der folgenden gasförmigen Stoffe: Silizium, Aluminium oder Kohlenmonoxid.

12. Erzeugnis nach wenigstens einem der Ansprüche 8 bis 11, bei dem der Brand bei Temperaturen im Bereich von 1.173 bis 2.690° C durchgeführt wird.

13. Verwendung einer bei Raumtemperatur metastabilen Mineralphase in Form von Zirconiumdioxid in kubischer Modifikation mit einem Anteil an Calcium, Magnesium und Yttrium unter 1 Masse-% als Rohstoff für die Herstellung von feuerfesten Erzeugnissen.

14. Verfahren zur Herstellung eines feuerfesten Erzeugnisses, umfassend die folgenden Schritte:
- zur Verfügungstellung einer bei Raumtemperatur stabilen Mineralphase in Form von Zirconiumdioxid in kubischer Modifikation mit einem Anteil an Calcium, Magnesium und Yttrium unter 1 Masse-%.;
- Zusammenfügen des Zirconiumdioxids mit weiteren feuerfesten Rohstoffen;
- Pressen eines Formkörpers aus dem Zirconiumdioxid und den weiteren feuerfesten Rohstoffen;
- 1 Brennen des Formkörpers zu einem feuerfesten Erzeugnis.

## Claims

1. Zirconium dioxide in the form of a mineral phase that is metastable in the cubic variant thereof at room temperature, with a content of less than 1% by weight calcium, magnesium and yttrium.

2. A refractory product comprising a mineral phase in the form of zirconium dioxide in the cubic variant thereof that is metastable at room temperature according to claim 1.

3. The product according to claim 2, in which the zirconium dioxide in the cubic variant thereof comprises monocrystallites with a grain size in the range from 30 to 1,000 µm.

4. The product according to at least one of claims 2 to 3, in which the zirconium dioxide is present in grains of zirconium dioxide that contain at least 50% by weight of the zirconium dioxide.

5. The product according to at least one of claims 2 to 4, in the shape of a wearing part for continuous steel casting.

6. The product according to at least one of claims 2 to 5, in the shape of a slide plate, a monobloc stopper, a nozzle, an immersion pipe or a submerged nozzle.

7. The product according to at least one of claims 2 to 6, in which the zirconium dioxide is present in a carbon matrix.

8. The product according to at least one of claims 2 to 7, in which the zirconium dioxide was obtained by firing zirconium dioxide that was partly or fully stabilised with stabilising additives in a reducing atmosphere and in the presence of a gas-phase reagent for the stabilising additives, followed by cooling.

9. The product according to claim 8, with stabilising additives in the form of at least one of the following substances: calcium oxide, magnesium oxide, yttrium oxide, or rare earth oxides.

10. The product according to at least one of claims 8 to 9, in which the reducing atmosphere has a partial oxygen pressure below 10⁻⁶ Pa.

11. The product according to at least one of claims 8 to 10, with a gas-phase reagent in the form of at least one of the following gas-phase substances: silicon, aluminium or carbon monoxide.

12. The product according to at least one of claims 8 to 11, in which the firing is carried out at temperatures in the range from 1,173 to 2,690 °C.

13. Use of a mineral phase that is metastable in the cubic variant of zirconium dioxide at room temperature having a content of less than 1% by weight calcium, magnesium and yttrium as the raw materials for manufacturing refractory products.

14. A method for manufacturing a refractory product comprising the following steps:
- Providing a mineral phase that is stable at room temperature in the form of zirconium dioxide in the cubic variant containing a quantity of less than 1% by weight calcium, magnesium and yttrium;
- Combining the zirconium dioxide with additional refractory raw materials;
- Pressing a moulded body made from the zirconium dioxide and the additional refractory raw materials;
- Firing the moulded body to produce a refractory product.

## Revendications

1. Dioxyde de zirconium sous la forme d'une phase minérale métastable à température ambiante en modification cubique avec une part de calcium, de magnésium et d'yttrium inférieure à 1 % en masse.

2. Produit réfractaire, comprenant une phase minérale métastable à température ambiante sous la forme de dioxyde de zirconium selon la revendication 1.

3. Produit selon la revendication 2, dans lequel le dioxyde de zirconium en modification cubique comprend des monocristallites d'une grosseur de cristaux dans l'ordre de 30 à 1.000 µm.

4. Produit selon au moins l'une quelconque des revendications 2 à 3, dans lequel le dioxyde de zirconium se présente en granulés de dioxyde de zirconium qui englobent le dioxyde de zirconium à au moins 50 % en masse.

5. Produit selon au moins l'une quelconque des revendications 2 à 4, sous la forme d'une pièce d'usure lors de la coulée continue d'acier.

6. Produit selon au moins l'une quelconque des revendications 2 à 5 sous la forme d'une plaque coulissante, d'un bouchon en monobloc, d'une buse, d'un tube plongeur ou d'une busette immergée.

7. Produit selon au moins l'une quelconque des revendications 2 à 6, dans lequel le dioxyde de zirconium se présente dans une matrice en carbone.

8. Produit selon au moins l'une quelconque des revendications 2 à 7, pour lequel le dioxyde de zirconium a été obtenu par cuisson de dioxyde de zirconium totalement ou partiellement stabilisé par des additifs stabilisateurs sous atmosphère réductrice en présence d'un agent réactif gazeux pour les additifs stabilisateurs et par refroidissement consécutif.

9. Produit selon la revendication 8, avec des additifs stabilisateurs sous la forme d'au moins l'une des matières suivantes : oxyde de calcium, oxyde de magnésium, oxyde d'yttrium ou oxydes de terres rares.

10. Produit selon au moins l'une quelconque des revendications 8 ou 9, pour lequel l'atmosphère réductrice présente une pression partielle d'oxygène inférieure à 10⁻⁶ Pa.

11. Produit selon au moins l'une quelconque des revendications 8 à 10, avec un agent réactif gazeux sous la forme d'au moins l'une des matières gazeuses suivantes : silicium, aluminium ou monoxyde de carbone.

12. Produit selon au moins l'une quelconque des revendications 8 à 11, pour lequel la cuisson est réalisée à des températures dans l'ordre de 1.173 à 2.690° C.

13. Utilisation d'une phase minérale métastable à température ambiante sous la forme de dioxyde de zirconium en modification cubique avec une part de calcium, de magnésium et d'yttrium inférieure à 1 % en masse pour la fabrication de produits réfractaires.

14. Procédé destiné à fabriquer un produit réfractaire, comprenant les étapes suivantes :
- mise à disposition d'une phase minérale stable à température ambiante sous la forme de dioxyde de zirconium en modification cubique avec une part de calcium, de magnésium et d'yttrium inférieure à 1 % en masse ;
- assemblage du dioxyde de zirconium avec d'autres matières premières réfractaires ;
- compression d'un corps moulé constitué du dioxyde de zirconium et des autres matières premières réfractaires ;
- cuisson du corps moulé en un produit réfractaire.
